# EUROPEAN PATENT SPECIFICATION

(11) **EP 4 316 986 B1**
(45) Date of publication and mention of the grant of the patent: **25.02.2026**
(21) Application number: 22188593.2
(22) Date of filing: 03.08.2022
(51) Int. Cl.: B64D 11/02, E03C 1/04

(54) **BRACKET**
HALTERUNG
SUPPORT

(43) Date of publication of application: 07.02.2024
(73) Proprietor: Zodiac Cabin Controls GmbH, 22547 Hamburg (DE)
(72) Inventor: BLUME, Klaas, 22547 HAMBURG (DE); KUEHNERT, Torsten, 22547 HAMBURG (DE); BENNA,, Erasmo, 22547 HAMBURG (DE); VAN DER PERK,, Edwin, 22547 HAMBURG (DE)
(74) Representative: Casalonga

(56) References cited:
- US-A1- 2012 137 427
- US-A1- 2013 180 601
- US-A1- 2014 075 667
- US-B1- 10 030 370

## Description

### TECHNICAL FIELD

The present invention relates to a fixing system to connect, install, mount and/or fix a device or an equipment to a structure or a structural environment such as, for example, an aircraft structure, through at least one first fixing means and at least one second fixing means. Furthermore, the present invention relates to a method for using such a fixing system in a method for connecting, installing, mounting and/or fixing a device or an equipment to a structure or a structural environment such as, for example, an aircraft structure to a structure of the aircraft and to a device.

The fixing system can be a bracket.

One specific application of the invention could be in connecting, installing, mounting and/or fixing a faucet or a soap dispenser to a countertop in an aircraft lavatory.

In particular, the present invention relates to bracket for connecting a device to a structure according to the preamble of independent claim 1, such as it is e.g. known from any of
- US 10 030 370 B1
- US 2014/075667 A1
- US 2013/180601 A1
- US 2012/137427 A1

### BACKGROUND ART

Currently there are three different mounting systems for a device or an equipment available. These known mounting systems are described below for exemplary water faucets.

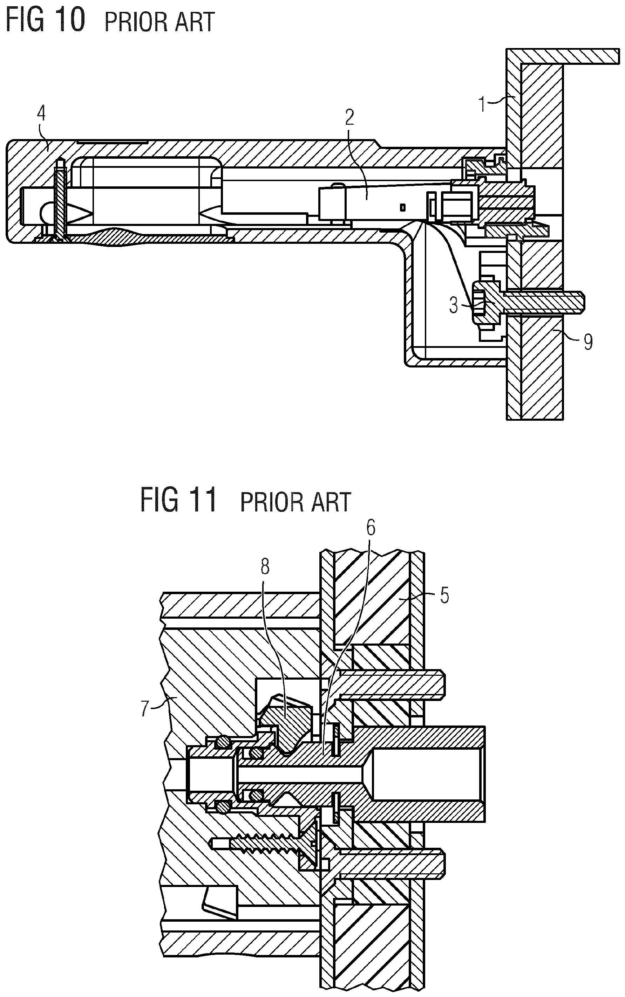

In the first prior art system shown in Fig. 10, a structure and/or countertop 1 provides at least two threaded inserts 9, in which a bracket 2 is fixed by at least two screws 3. This bracket 2 is used to install and fix a faucet 4. The respective bracket 2 belongs together with the respective faucet 4 and they are normally delivered within one assembly (one part number).

In the second prior art system shown in Fig. 11, a countertop 5 provides two bolts 6, which also serve as hydraulic interface. A water faucet 7 will be put on these bolts 6 and secured with a bracket comprising at least two screws 8 or with at least two screws (not shown in Fig. 11), which grip into two undercuts in the bolts 6.

The third prior art system is a combination of the first and second systems, where a plate with two bolts is fixed to a countertop by screws.

Further, in immobile structures such as, for example, lavatories or kitchens in buildings, houses or flats where enough space is available and/or where a quick exchange of the device or equipment in a limited short amount of time is not required, devices or equipment such as faucets are fixed from the back side of the structure.

### PROBLEMS ASSOCIATED WITH THE PRIOR ART

All existing systems in the prior art with limited space have at least one severe and crucial disadvantage in that the hole pattern of the device or equipment such as a faucet has to match exactly to the hole pattern of the structure such as, for example, an aircraft structure such as, for example, a lavatory structure which could be a countertop, for example. Hereby, different structural environments such as, for example, lavatories, for different aircraft classes often also have different hole patterns in the structure such as, for example, an aircraft structure which could be a countertop in a lavatory, for example. If there should occur differing hole patterns in different structures, it would not be possible to install the same device or equipment such as, for example, a specific faucet in different structures such as, for example, different aircraft structures such as, for example, countertops in a lavatory. A specific device or equipment has to be constructed for every specific corresponding structure.

This disadvantage is not limited to faucets and also not limited to aircrafts and/or aircraft structures but generally occurs in devices or equipment that should be connected, installed, mounted and/or fixed to a structure or a structural environment with a hole pattern because the hole pattern in any device or equipment that should be connected, installed, mounted and/or fixed to a structure has to match exactly to the hole pattern of said structure.

Fixing systems in immobile structures may be installed through one hole of sufficient size but hereby the device or equipment is fixed from the back side because there are normally no space or weight restrictions and/or no requirements for a quick exchange of the device or equipment in a limited short amount of time.

### TECHNICAL OBJECTIVES OF THE INVENTION

The main technical problems to be solved by the present invention are:
1) In many structural environments, space for structures and devices or equipment is getting more and more reduced, which leads to geometrical and environment design constraints. For example, modern aircraft lavatories are getting more and more space reduced, for example, for gaining more seats and more paying passengers, which leads to reducing space such as for a washbasin space envelope resulting in device or equipment geometrical and environmental design constraints such as, for example, faucet geometrical and environment design constrains.
2) Harmonization of the fixing system. The present invention discloses a fixing concept to find, for example, a common mounting bracket concept for devices or equipment to be installed in various different structures or structural environments without any adapter parts.
3) Optimized and easy installation of devices or equipment to structures or structural environments.

### SUMMARY OF THE INVENTION

The purpose of this invention is a fixing concept for any device or equipment installed on any kind of structure or structural environment such as, for example, an aircraft structure such as, for example, a lavatory, such as, for example, a faucet or a soap dispenser to a countertop in an aircraft lavatory to enable minimum space usages and realizing maximum flexibility regarding different structural environments without the need for a dedicated adapter.

The universal fixing concept possibly in form of a fixing system possibly in form of a universal mounting bracket can be applied in any structural environment to enable installation of an appropriate device or equipment.

A structure can be of any kind to which a device or an equipment could be connected, installed, mounted and/or fixed to, such as transport vehicles such as, for example, aircraft, trains, busses, trucks, ships or cars, more particularly, passenger transport vehicles for passenger transportation such as, for example, passenger aircraft, passenger trains, passenger busses, passenger trucks, passenger ships or passenger cars, even more particularly, respective lavatories, cabins, galleys and/or kitchenettes on said passenger transport vehicles such as, for example, a lavatory, a cabin and/or a galley of an aircraft, a lavatory, a cabin, a galley and/or a kitchenette of a train, a lavatory, a cabin, a galley and/or a kitchenette on a bus, a lavatory, a cabin, a galley and/or a kitchenette on a truck, a lavatory, a cabin, a galley and/or a kitchenette on a ship or lavatory, a cabin, a galley and/or a kitchenette of a RV (recreational vehicle).

The structure can also be any kind of building, house, flat or immobile installation, such as a lavatory, a cabin, a galley and/or a kitchenette thereof.

Examples for a device or equipment are touchless, pushbutton, mechanical, electromechanical faucets, soap dispensers or water dispensers in a lavatory or galley compartment, or disinfection dispensers with a location in the aircraft cabin.

An example for a structural environment is an aircraft structure.

An example for an aircraft structure is a countertop, where said countertop can be located in an aircraft lavatory.

The terms "device" and "equipment" are used interchangeably, their meaning, however, is understood in the normal way of each word and they are not synonyms. The terms "structure" and "structural environment" are also used interchangeably, their meaning, however, is understood in the normal way of each word and they are not synonyms.

Several goals are achieved by the present invention:
- Installation independent from the wall thickness of the structure.
- Independence from structural pre-defined interfaces.
- Interfaces such as, for example, electrical and/or hydraulically interfaces, can be integrated in the fixing concept.
- Independence of the fixing concept from the equipment part.
- Mounting from the front side without visible fixing points.
- Fixation on the back side of the structural environment.
- Possibility to fix an equipment in several different structural environments.
- Independent of the thickness and pre-defined interfaces.
- No visible fixing means which need to be covered and/or sealed.
- The at least one connection such as, for example, a hydraulic connection and/or an electrical connection as well as the fastening of the equipment are integrated in the fixing concept, which reduces the size needed.
- Quick installation and de-installation of the equipment possible.
- With simple and reduced fixing means such as, for example, one screw fixation, improved finishing and appearance and less susceptibility for pollution may be achieved.

### TECHNICAL SOLUTIONS AND ADVANTAGEOUS EFFECTS OF THE INVENTION

The specific examples below describe a fixing bracket and method for a faucet on a countertop in an aircraft, but the present invention is not limited to fixing a faucet. The present invention discloses a universal fixing system which can possibly be in the form of a universal mounting bracket for any other device or equipment (e. g. a soap dispenser) inside a structure such as, for example, an airplane. The invention also discloses a corresponding method connecting a bracket to a structure and to a device.

The present invention is also not limited to a countertop in a lavatory module. The fixing system and/or method of the present invention can be used in any other structural environment, for example, galleys or cabin dividers.

In order to solve the above stated technical problems, a fixing system according to the invention provides a bracket as disclosed in claim 1 and a method how to install a bracket of the present invention according to claim 9. Preferred embodiments are disclosed in the dependent claims.

According to the invention, a bracket for connecting a device to a structure comprises at least one first fixing means that is configured to fix the bracket to the structure.

The shape of the bracket is not specifically limited and can be circular, elliptical, triangular, free-shaped, rectangular, square or any other suitable shape as long as the bracket can fit into a hole in the structure.

Further, the at least one first fixing means is not specifically limited as long as the at least one first fixing means can achieve two predetermined positions and the distance in a direction perpendicular to the outline of the bracket between the bracket and at least part of the at least one first fixing means can be adapted. In the first position, the at least one first fixing means is located within the outline of the bracket so that the bracket can be inserted into the hole of the structure from the front side of the structure. In the second position, the at least one first fixing means is located outside the outline of the bracket at least partially so that the bracket cannot fit through the hole of the structure and can be fixed to the structure from the back side of the structure.

In the second predetermined position, the bracket can be fixed to the structure.

Further, the at least one first fixing means can be used for structures of different thickness. The at least one first fixing means is capable of varying in distance in a direction perpendicular to the outline of the bracket and the part of the at least one first fixing means that can be located within and outside the outline of the bracket can be fixed at a varying distance depending on the thickness of the structure.

This can be achieved with a threaded screw or a bolt or any equivalent means that can achieve an equivalent effect.

One possibility to implement the at least one first fixing member is through the features of at least one lock wing, at least one fixing screw and at least one stop rib.

The at least one fixing screw is connected to the at least one lock wing. The at least one stop rib is configured to limit the movement of the at least one lock wing at a predetermined position so that the at least one first fixing means is located outside the outline of the bracket at least partially.

The at least one lock wing can move from a first position within the outline of the bracket to a second position where the at least one lock wing is located outside the outline of the bracket at least partially when the at least one fixing screw is rotated in a closing direction, which may be a clockwise rotation or a counterclockwise rotation. The opening direction is, subsequently, a counterclockwise rotation or a clockwise rotation, respectively.

Further, the at least one fixing screw can be reached from the front side of the structure and rotated with a suitable tool such as a screwdriver to tighten and loosen the bracket from the structure via the movement of the at least one lock wing. Through the at least one fixing screw the at least one lock wing can be moved in the direction perpendicular to the outline of the bracket.

By rotating the at least one fixing screw, the at least one lock wing can start to rotate. The at least one fixing screw may be not parallel, but inclined and/or turned outwards to a direction perpendicular to the outline of the bracket but it is also possible to have the at least one screw to be parallel to the direction perpendicular to the outline of the bracket. It is also possible that two, three, four, five, six or more fixing screws are present. In case there are two or more screws, two or more fixing screws can be parallel to each other and/or two or more screws can be inclined to each other. The inclination of the at least one screw allows better access to the screwhead with a corresponding tool and impedes that the diameter of the bracket will be unnecessarily increased.

The at least one stop rib prevents that the at least one lock wing can rotate too far and limits the rotational movement of the at least one lock wing to a predetermined position so that the at least one lock wing is located outside the outline of the bracket at least partially. When the at least one lock wing touches the at least one stop rib, the at least one lock wing cannot rotate anymore but the at least one screw can continue to turn into the thread of the at least one lock wing, so the at least one lock wing will come closer to the back side of the structure until the bracket is completely fixed to the structure independent of the thickness of the structure.

Due to the predetermined length of the at least one fixing screw, the at least one lock wing can be located at a varying distance to the bracket and the bracket can be fixed to a structure of different thickness up to the length of the at least one fixing screw.

Therefore, the bracket of the present invention can be fixed to a variety of structures with a variety of different thicknesses.

The thickness of the structure could also vary as the at least one lock wing can adapt to different thicknesses within one structure.

The bracket further comprises at least one second fixing means configured to fix the device to the bracket.

While the bracket can be fixed to the structure as described above through the at least one first fixing means, the equipment can be fixed to the bracket with the at least one second fixing means.

The at least one second fixing means is not particularly limited as long as it can stably fix the equipment to the bracket.

Hereby, the design of the bracket allows the bracket to enclose the outside wall of the equipment and take up the loads of the equipment.

Therefore, the structural requirements for fixing the equipment to the bracket are greatly reduced, which makes the fixation of an equipment much easier and more stable.

One possibility to fix the equipment to the bracket is by a screw. Hereby, only one single screw is sufficient for achieving a fast and stable fixation - contrary to the prior art as explained above (Figs. 10 and 11). The one fixing screw presses a locking bolt upwards. The locking bolt is guided in the bracket. The locking bolt can secure the equipment on the top side of the bracket.

Hereby, the bracket is located in one single hole of sufficient and respective dimensions in the structure. With such a hole all other holes and an individual hole pattern in the structure become obsolete and can be omitted in the structure.

Such a single hole of respective dimensions also allows to use the space behind the structure, which is not possible when the various supply lines are placed through a plurality of individual smaller holes through a structure with an individual hole pattern.

There may also be an additional cutout in the hole of the structure fitting to an optional protrusion of the bracket. This optional protrusion in the bracket and its relating additional cutout in the structure can have a centering feature for the bracket and may also prevent rotation of the bracket.

There may also be alternative ways to implement an optional centering feature that is configured to establish a centering between the structure and the bracket, respectively. The implementation of such a centering feature is not limited as long as a centering can be achieved.

For example, it is also possible to implement at least one flattened area in the hole of the structure part, where the bracket can be propped with at least two ribs or at least one flat surface of the bracket.

The optional protrusion of the bracket may be located on the top of the structure or may be located at any suitable position around the structure.

This additional cutout should relate to the position of the optional protrusion.

The bracket further comprises at least one connector configured to connect at least one supply to the bracket. The supply can be at least one hydraulic pipe and/or at least one electrical wire and/or a tube or wire to supply the equipment with the necessary commodity such as water, current or soap.

In addition, the supply such as, for example, at least one hydraulic pipe and/or at least one electrical wire can be connected to the at least one connector.

Through the disclosure of the present invention, the crucial difference of this solution of the present invention over solutions known from the prior art is that the fixation of the bracket is completely moved to the backside of the structure. In the solutions known from the general prior art the fixation is on the front side. This allows implementation of at least one supply, for example at least one hydraulic interface and/or at least one electrical connector inside the bracket, for example one hydraulic interface and one electric connector and therefore more space inside the equipment for other features is realized.

### DESCRIPTION OF THE DRAWINGS

**Fig. 1** shows a countertop with a hole as one possible example for a structure to be connected to an environment with a fixing system of the present invention such as a bracket.
**Fig. 2** shows a bracket according to an embodiment of the present invention where exemplarily two hydraulic connections and one electric connection are connected to the bracket as well as an exemplarily countertop.
**Fig. 3** shows a front view of a bracket according to the embodiment shown in Fig. 2.
**Fig. 4** shows a cross-sectional view of a bracket according to the embodiment shown in Fig. 2.
**Figs. 5a, 5b** show a rotation of exemplarily two lock wings in the bracket shown in Fig. 2 in a first position and a second position in a front view (left) and a side view (right).
**Fig. 6** shows a cross-sectional view section through the bracket shown in Fig: 2 and a faucet.
**Fig. 7** shows one example of a fixation of a faucet to the bracket shown in Fig. 2.
**Fig. 8** shows a lateral cross-sectional view of a bracket shown with the faucet in Fig. 7 fixed thereto,
**Fig. 9** shows an exploded view of an assembly comprising a bracket shown in Fig. 2.
**Fig. 10** shows a first mounting concept of the prior art.
**Fig. 11** shows a second mounting concept of the prior art.

### DETAILED DESCRIPTION OF THE DRAWINGS

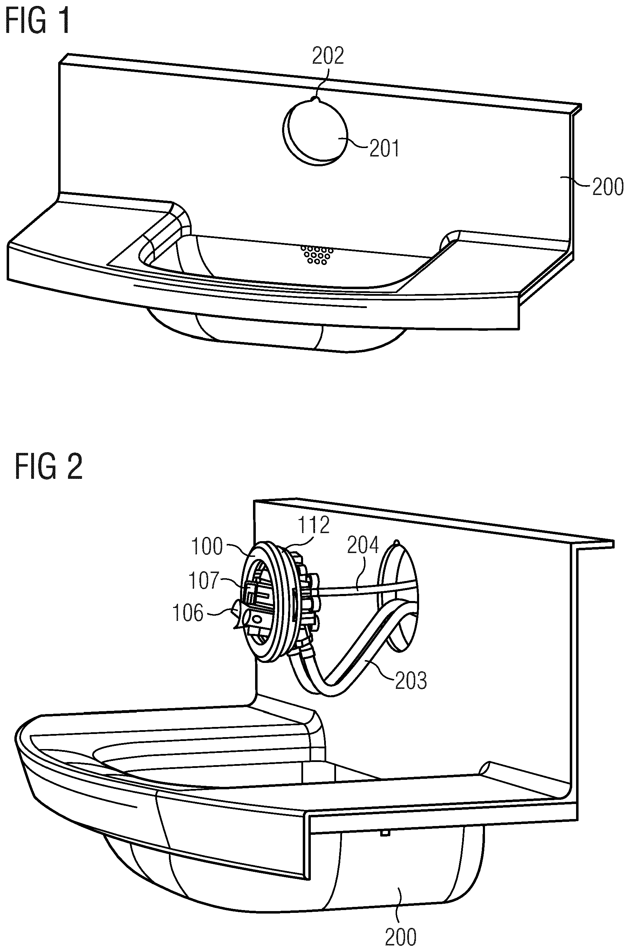

In order to solve the technical problems, in a method according to the present invention one single hole 201 of sufficient and respective dimensions can be drilled in a structure, for example, a countertop 200 in an aircraft cabin, to which a device or an equipment, for example, a faucet, can be fixed. Fig. 1 shows a countertop 200 as one possible example for a structure to which the fixing system can be applied to.

The present invention relates to a fixing system that can fix the equipment to the structure as well as a method for fixing the equipment to the structure with the fixing system. One example for the fixing system, as illustrated in **Figs. 2-9****,** may be a bracket.

In the example of the countertop **200** as a structure shown in **Fig. 1****,** the diameter of the hole **201** in the countertop **200** may be 68 mm. Contrary to the prior art approach with smaller sized holes at a specific pattern, according to the present invention there is provided only one single sufficiently dimensioned hole. This sufficiently dimensioned hole also allows to use the space behind the structure such as a countertop **200.**

There may also be a cutout **202** at the outline of the hole **201** of the countertop **200** in order to have an optional centering feature for a bracket **100** which may also prevent rotation of the bracket **100.** This cutout 202 may be round, rectangular, triangular, free-shaped or a further shape to allow the centering of the bracket **100**.

In **Fig. 2****,** as one possible example for an at least one supply, it is shown two of the at least one hydraulic pipe **203** and one of the at least one electrical wire **204,** which can be pulled through the hole **201** and fixed to the bracket **100.** Afterwards the bracket **100** can be placed in the hole **201** of the countertop **200.**

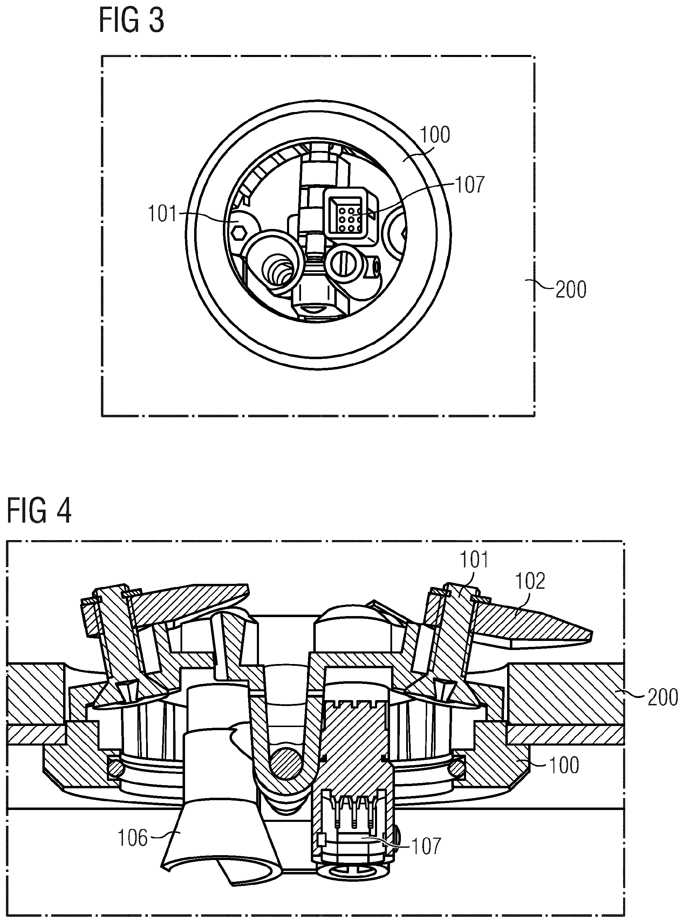

By rotating at least one fixing screw **101 (****Fig. 3** shows the view with two fixing screws **101** in an axis direction of the left screw **101),** at least one lock wing **102** will start to rotate. In this exemplary embodiment of the present invention, the fixing screws **101** are not parallel, but turned outwards, as shown in **Fig. 4****,** but it is also possible to have fixing screws **101,** which are parallel to each other and/or parallel to the direction perpendicular to the outline of the bracket **100.** The inclination of the fixing screws **101** allows simplified access to the screwhead of the fixing screws **101** with a corresponding tool and impedes that the diameter of the bracket **100** will be unnecessarily increased.

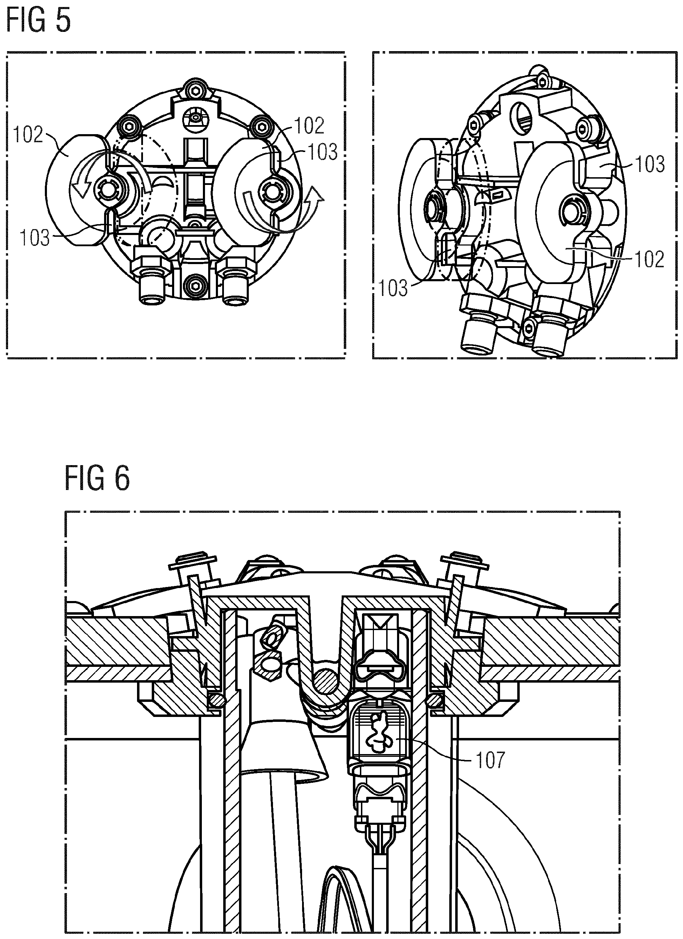

In **Fig. 5****,** at least one stop rib **103** is shown. This at least one stop rib **103** prevents the at least one lock wing **102** from rotating too far. When the at least one lock wing **102** touches the at least one stop rib **103,** the at least one lock wing **102** cannot rotate anymore. Nevertheless, the at least one fixing screw **101** continues to turn into the thread of the at least one lock wing **102,** so the at least one lock wing **102** will continuously come closer to the back side of the countertop **200** until the bracket **100** is completely fixed to the countertop **200.**

In the present invention, the difference of the solution compared to other solutions in the general prior art is that the fixation of the bracket **100** is completely moved to the back side of the countertop **200.** In the solutions of the prior art the fixation is on the front side. Moving the fixation of the bracket **100** completely moved to the back side allows to implement at least one hydraulic connector **106** and/or at least one electrical connector **107** inside the bracket **100** of the present invention and therefore more space inside the faucet **205** for other features is realized.

The bracket 100 may, further, have a protrusion **112** that may fit into the cutout **202** of the countertop **200.**

After the bracket **100** is installed, the at least one electrical connector of the faucet **205** needs to be connected manually to the bracket **100.** Afterwards the faucet **205** will be placed into the bracket **100.** The design of the bracket **100** allows the bracket **100** to enclose the outside wall of the faucet **205** and take up the loads of the faucet **205 (****Fig. 6****).**

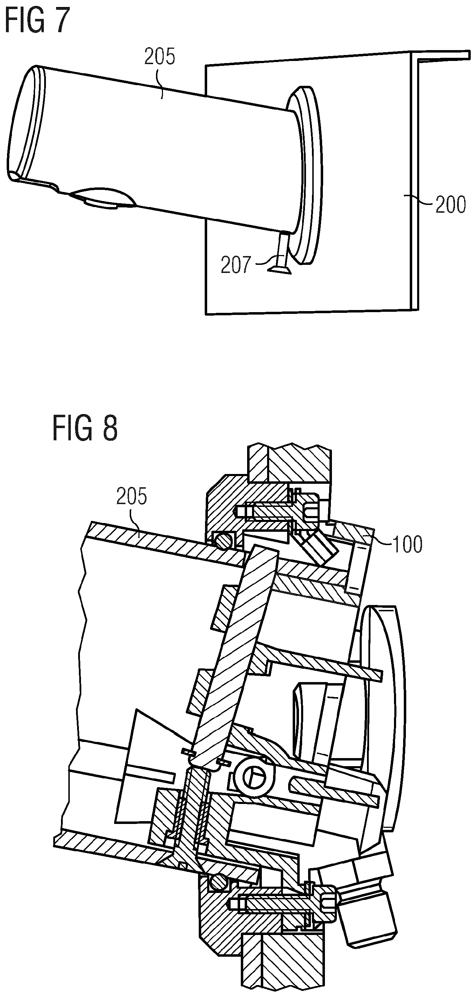

Thereafter the faucet **205** can be fixed with only one single screw **207 (****Fig. 7****).** The one fixing screw **207** of this specific example presses a locking bolt upwards. The locking bolt **105** can be guided in the bracket **100** and can secure the faucet **205 on** the top side **(****Fig. 8****).**

In all faucets of the prior art, there are at least two visible fixing screws required. Every visible screw is a disadvantage, as it has to be sealed and it makes the faucet more difficult to clean as well as susceptible for pollutants.

The exemplary features how the concept of the present invention could be implemented is shown for two lock wings **102,** two fixing screws **101,** two stop ribs **103,** two connectors **106** for two hydraulic pipes and one connector **107** for one electrical wire in the Figures 2-9. However, the number of the lock wings **102** and the fixing screws **101** can be one, two, three, four, five, six or any other number as long as the number corresponds to each of those features. Thus, each lock wing **102** is connected to one fixing screw **101.** Hereby, the number of lock wings **102** can be the same or less as the number of fixing screws **101.** When the number of lock wings **102** is the same as the number of fixing screws **101,** each lock wing **102** can be connected to one corresponding fixing screw **101.** When the number of lock wings **102** is less than the number of fixing screws **101,** one or more lock wings **102** can be connected to one fixing screw **101.**

Further, the number of stop ribs **103** can be one, two, three, four, five, six or any other number as long as each lock wing **102** can have a first position and a second position as described above.

The number of the stop ribs **103** does not have to be the same as the number of the lock wings **102** and the fixing screws **101.** Each stop rib **103** can be configured to limit the rotation of one or more lock wings **102.**

Further, the number of connectors **106, 107** can be one, two, three, four, five, six or any other number, respectively, to provide as many connectors as necessary.

Furthermore, the example shows an inclined faucet **205 in** **Figs.** 7 **and 8****,** but the present invention is not limited to any inclination or any definite angle. The angle between the equipment and the structural environment can have an arbitrary value as it is suitable for the use of the equipment.

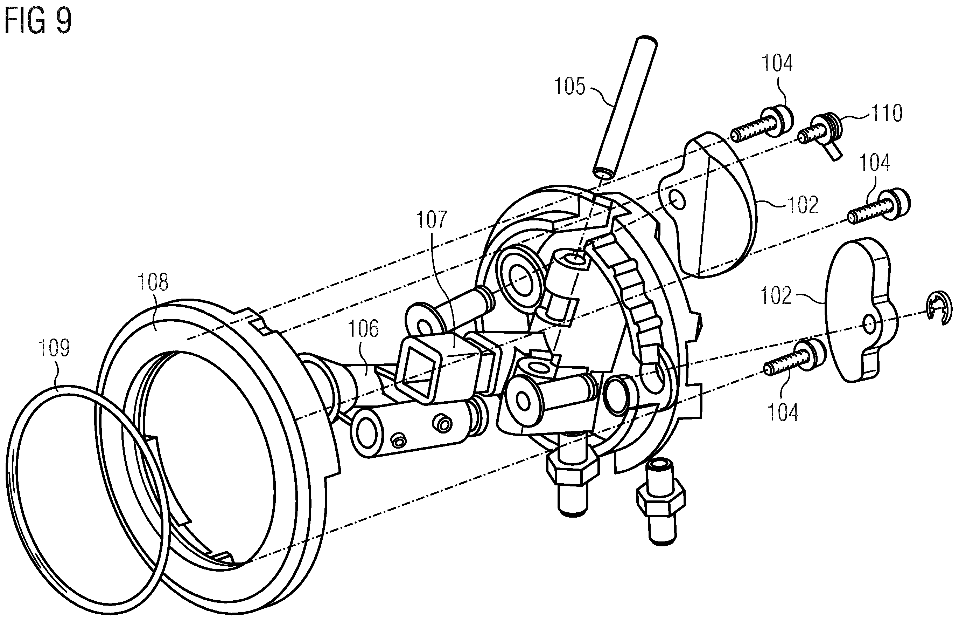

In addition, **Fig. 9** shows a specific exemplary assembly comprising a bracket of one embodiment of the present invention. This bracket comprises two lock wings **102,** two fixing screws **101,** a locking bolt **105,** a hydraulic connector **106** and an electrical connector **107.** However, as stated above the number of all of these features can vary in the present invention depending on the needs of the device or equipment and the structural restrictions. **Fig. 9** additionally shows optional features, which may be included in an assembly. A cover and an O-ring may be connected to the bracket through bonding screws **110.** Alternatively, a cover and/or an O-ring may be integrated and/or integrally connected to the bracket.

The essential elements of a universal mounting bracket of the present invention are:
- At least one lock wing to install the bracket independently from the wall thickness of the structure. Independence from structurally pre-defined interfaces.Numerous electrical and hydraulical interfaces can be integrated in the bracket. Independence of the mounting bracket from the equipment part. Mounting from the front side without visible fixing points.Fixation on the back side of a structural environmentPossibility of fixing an equipment in several different structural environments independent of the thickness and pre-defined interfaces.No visible fixing screws which need to be covered and/or sealed. The hydraulic connections and the electrical connections as well as the fastening of the equipment are integrated in the bracket, which reduces the size of the equipment.Quick installation and de-installation of the equipment. Improved finishing and appearance due to one screw fixation of the equipment and less susceptibility for pollution.

### ALTERNATIVE EMBODIMENTS

This invention describes a solution for a fixing system in an aircraft lavatory, but similar devices could be used in other structures for various equipment.

### INDUSTRIAL APPLICABILITY

This invention can be applied in structures in transport vehicles such as, for example, commercial aircrafts.

### LIST OF REFERENCE NUMERALS

- bracket: 100
- fixing screw: 101
- lock wing: 102
- stop rib: 103
- fixing screw: 104
- locking bolt: 105
- hydraulic connector: 106
- electrical connector: 107
- cover: 108
- O-ring: 109
- bonding screws: 110
- hydraulic interface: 111
- protrusion: 112

- countertop: 200
- hole: 201
- cutout: 202
- hydraulic pipe: 203
- electrical wire: 204
- faucet: 205

## Claims

1. A bracket (100) for connecting a device to a structure, said bracket (100) comprising:
at least one first fixing means comprising at least one fixing screw (101),
at least one lock wing (102) connected to the at least one fixing screw (101) and configured to be rotated by the at least one fixing screw (101),
at least one stop rib (103) configured to limit the movement of the at least one lock wing (102) at a predetermined position, and
at least one second fixing means configured to fix the device to the bracket (100),
wherein the bracket (100) is configured to be located in a hole (201) of the structure,
**characterized in that**
said bracket comprises at least one hydraulic connector (106) and/or electrical connector (107) which are configured to connect at least one supply to the bracket (100).

2. The bracket (100) according to claim 1, wherein the bracket (100) has a protrusion (112) in the radial direction configured to fit into a cutout of the hole of the structure.

3. The bracket (100) according to any one of the preceding claims, wherein at least one of the at least one fixing screws (101) is inclined and/or turned outwards to a direction perpendicular to the outline of the bracket (100).

4. The bracket (100) according to any one of the claims 1 to 2, wherein at least one of the at least one fixing screws (101) is parallel to a direction perpendicular to the outline of the bracket (100).

5. The bracket (100) according to any one of the preceding claims, comprising at least two fixing screws (101) parallel to each other.

6. The bracket (100) according to any one of the claims 1-4, comprising at least two fixing screws (101) inclined to each other.

7. The bracket (100) according to any one of claims 1-3 or 6, comprising at least two fixing screws (101) inclined to each other and turned outwards to a direction perpendicular to the outline of the bracket (100).

8. The bracket (100) according to any one of the preceding claims, wherein the bracket (100) is configured to enclose an outside wall of the device.

9. Method for connecting a device with a bracket (100) according to any of the previous claims to a structure, said structure having a front side and a back side opposed to the front side and a hole (201) connecting the front side and the back side, said method comprising the steps of:
- connecting at least one supply to the connector (106, 107) of the bracket (100);
- positioning the bracket (100) in the hole of the structure on the front side and inserting the at least one fixing screw (101) connected to at least one lock wing (102) and the at least one lock wing (102) from the front side of the structure to the back side of the structure through the hole in the structure;
- rotating at least one fixing screw (101) connected to at least one lock wing (102) and rotating the at least one lock wing (102) until the rotation of the at least one lock wing (102) is stopped by at least one stop rib (103), whereby the rotation of the at least one fixing screw (101) moves the at least one lock wing (102) towards the structure from the back side of the structure until the bracket (100) is fixed to the structure, and providing at least one second fixing means and fixing the device to the bracket (100) with the second fixing means

## Patentansprüche

1. Halterung (100) zum Verbinden einer Vorrichtung mit einer Struktur, wobei die Halterung (100) Folgendes umfasst:
mindestens ein erstes Befestigungsmittel, das mindestens eine Befestigungsschraube (101) umfasst,
mindestens einen Verriegelungsflügel (102), der mit der mindestens einen Befestigungsschraube (101) verbunden und dafür konfiguriert ist, durch die mindestens eine Befestigungsschraube (101) gedreht zu werden,
mindestens eine Anschlagrippe (103), die dafür konfiguriert ist, die Bewegung des mindestens einen Verriegelungsflügels (102) an einer vorbestimmten Position zu begrenzen, und
mindestens ein zweites Befestigungsmittel, das dafür konfiguriert ist, die Vorrichtung an der Halterung (100) zu befestigen,
wobei die Halterung (100) dafür konfiguriert ist, in einem Loch (201) der Struktur angeordnet zu werden,
**dadurch gekennzeichnet, dass**
die Halterung mindestens einen Hydraulikverbinder (106) und/oder einen elektrischen Verbinder (107) umfasst, die dafür konfiguriert sind, zumindest einen Anschluss mit der Halterung (100) zu verbinden.

2. Halterung (100) nach Anspruch 1, wobei die Halterung (100) einen Vorsprung (112) in der radialen Richtung aufweist, der dafür konfiguriert ist, in einen Ausschnitt des Lochs der Struktur zu passen.

3. Halterung (100) nach einem der vorhergehenden Ansprüche, wobei mindestens eine von der mindestens einen Befestigungsschraube (101) geneigt und/oder nach außen zu einer Richtung, senkrecht zu dem Umriss der Halterung (100), gedreht ist.

4. Halterung (100) nach einem der Ansprüche 1 bis 2, wobei mindestens eine von der mindestens einen Befestigungsschraube (101) parallel zu einer Richtung, senkrecht zu dem Umriss der Halterung (100), ist.

5. Halterung (100) nach einem der vorhergehenden Ansprüche, die mindestens zwei Befestigungsschrauben (101), die zueinander parallel sind, umfasst.

6. Halterung (100) nach einem der Ansprüche 1 bis 4, die mindestens zwei Befestigungsschrauben (101), die zueinander geneigt sind, umfasst.

7. Halterung (100) nach einem der Ansprüche 1 bis 3 oder 6, die mindestens zwei Befestigungsschrauben (101), die zueinander geneigt und zu einer Richtung, senkrecht zu dem Umriss der Halterung (100), nach außen gedreht sind, umfasst.

8. Halterung (100) nach einem der vorhergehenden Ansprüche, wobei die Halterung (100) dafür konfiguriert ist, eine Außenwand der Vorrichtung zu umschließen.

9. Verfahren zum Verbinden einer Vorrichtung mit einer Halterung (100) nach einem der vorhergehenden Ansprüche mit einer Struktur, wobei die Struktur eine Vorderseite und eine zu der Vorderseite entgegengesetzte Rückseite und ein Loch (201), das die Vorderseite und die Rückseite verbindet, aufweist, wobei das Verfahren die folgenden Schritte umfasst:
- Verbinden mindestens eines Anschlusses mit dem Verbinder (106, 107) der Halterung (100),
- Positionieren der Halterung (100) in dem Loch der Struktur auf der Vorderseite und Einsetzen der mindestens einen Befestigungsschraube (101), die mit dem mindestens einen Verriegelungsflügel (102) verbunden ist, und des mindestens einen Verriegelungsflügels (102) von der Vorderseite der Struktur aus bis zu der Rückseite der Struktur durch das Loch in der Struktur,
- Drehen der mindestens einen Befestigungsschraube (101), die mit dem mindestens einen Verriegelungsflügel (102) verbunden ist, und
- Drehen des mindestens einen Verriegelungsflügels (102), bis die Drehung des mindestens einen Verriegelungsflügels (102) durch die mindestens eine Anschlagrippe (103) angehalten wird, wodurch die Drehung der mindestens einen Befestigungsschraube (101) den mindestens einen Verriegelungsflügel (102) von der Rückseite der Struktur aus hin zu der Struktur bewegt, bis die Halterung (100) an der Struktur befestigt ist, und Bereitstellen mindestens eines zweiten Befestigungsmittels und Befestigen der Vorrichtung an der Halterung (100) mit dem zweiten Befestigungsmittel.

## Revendications

1. Support (100) destiné à fixer un dispositif à une structure, ledit support (100) comprenant :
au moins un premier moyen de fixation comprenant au moins une vis de fixation (101),
au moins une ailette de blocage (102) raccordée à au moins une vis de fixation (101) et configurée pour être tournée par au moins une vis de fixation (101),
au moins une butée (103) configurée pour limiter le mouvement d'au moins une ailettes de blocage (102) à une position prédéterminée, et
au moins un deuxième moyen de fixation configuré pour fixer le dispositif au support (100),
dans lequel Support (100) est configuré pour être logé dans un trou (201) de la structure,
**caractérisé en ce que**
ledit support comprend au moins un connecteur hydraulique (106) et/ou un connecteur électrique (107) configuré pour connecter au moins une alimentation au support (100).

2. Support (100) selon la revendication 1, dans lequel le support (100) présente une protubérance (112) dans la direction radiale conçue pour s'insérer dans une découpe du trou de la structure.

3. Support (100) selon une quelconque des revendications précédentes, dans lequel au moins une des au moins une vis de fixation (101) est inclinée et/ou tournée vers l'extérieur dans une direction perpendiculaire au contour du support (100).

4. Support (100) selon une quelconque des revendications 1 à 2, dans lequel au moins une des au moins une vis de fixation (101) est parallèle à une direction perpendiculaire au contour du support (100).

5. Support (100) selon une quelconque des revendications précédentes, comprenant au moins deux vis de fixation (101) parallèles l'une à l'autre.

6. Support (100) selon une quelconque des revendications 1 à 4, comprenant au moins deux vis de fixation (101) inclinées l'une vers l'autre.

7. Support (100) selon une quelconque des revendications 1 à 3 ou 6, comprenant au moins deux vis de fixation (101) inclinées l'une vers l'autre et tournées vers une direction perpendiculaire au contour du support (100).

8. Support (100) selon une quelconque des revendications précédentes, dans lequel le support (100) est configuré pour englober une paroi extérieure du dispositif.

9. Procédé de raccordement d'un dispositif avec un support (100) selon une quelconque des revendications précédentes à une structure, ladite structure ayant une face avant et une face arrière opposée à la face avant et un trou raccordant la face avant et la face arrière, ledit procédé comprenant les étapes de :
- connexion d'au moins une alimentation au connecteur (106, 107) du support (100) ;
- positionnement du support (100) dans le trou de la structure sur la face avant et insertion de la au moins une vis de fixation (101) raccordée à au moins une ailette de verrouillage (102) et la moins une ailette de verrouillage (102) de la face avant de la structure à la face arrière de la structure à travers le trou dans la structure ;
- rotation d'au moins une vis de fixation (101) raccordée à au moins une ailette de blocage (102) et rotation d'au moins une ailette de blocage (102) jusqu'à ce que la rotation d'au moins une ailette de blocage (102) soit arrêtée par au moins une butée (103), moyennant quoi la rotation d'au moins une vis de fixation (101) déplace la au moins une ailette de blocage (102) vers la structure depuis la face arrière de la structure jusqu'à ce que le support (100) soit fixé à la structure et la fourniture d'au moins un deuxième moyen de fixation et la fixation du dispositif au support (100) avec le deuxième moyen de fixation.
